# EUROPEAN PATENT SPECIFICATION

(11) **EP 4 016 838 B1**
(45) Date of publication and mention of the grant of the patent: **26.07.2023**
(21) Application number: 21210656.1
(22) Date of filing: 26.11.2021
(51) Int. Cl.: H02S 20/10, H02S 30/00

(54) **PHOTOVOLTAIC SYSTEM**
FOTOVOLTAIKSYSTEM
SYSTÈME PHOTOVOLTAÏQUE

(30) Priority: 21.12.2020 IT 202000031595
(43) Date of publication of application: 22.06.2022
(73) Proprietor: Iannuzzi, Maurizio, 42122 Reggio Emilia (IT)
(72) Inventor: Iannuzzi, Maurizio, 42122 Reggio Emilia (IT)
(74) Representative: Monelli, Alberto

(56) References cited:
- WO-A1-2018/071332
- US-A1- 2010 147 359
- US-B1- 7 921 843

## Description

The present invention relates to a photovoltaic system, in particular a photovoltaic system with support ballasts supporting the photovoltaic panels. Systems provided with concrete ballasts arranged in a row, mutually spaced apart and which in pairs support opposite sides of the panels are known. In order to increase wind resistance and stiffen the structure of the system, these ballasts are joined by a metal bar to which concrete weights are in turn applied. Such a prior art photovoltaic system is described in document US 7921843 B1.

This solution is not free from drawbacks. In particular, this metal bar under the action of the wind and of the ballasts applied thereto risks deforming over time. Furthermore, although it is usually made of galvanised metal, over time it can be subject to corrosion phenomena (since it is a bar that performs an important function of stiffening and increasing structural rigidity, this is particularly negative).

In this context, the technical task underlying the present invention is to provide a photovoltaic system which obviates the drawbacks in the prior art as described above. In particular, it is an object of the present invention to provide a photovoltaic system which has the maximum flexibility of use and versatility of use.

The defined technical task and the specified aims are achieved by a photovoltaic system comprising the technical characteristics set forth in independent claim 1.

Further characteristics and advantages of the present invention will become more apparent from the indicative and thus non-limiting description of a preferred but not exclusive embodiment of a photovoltaic system, as schematically illustrated in the appended drawings, in which:

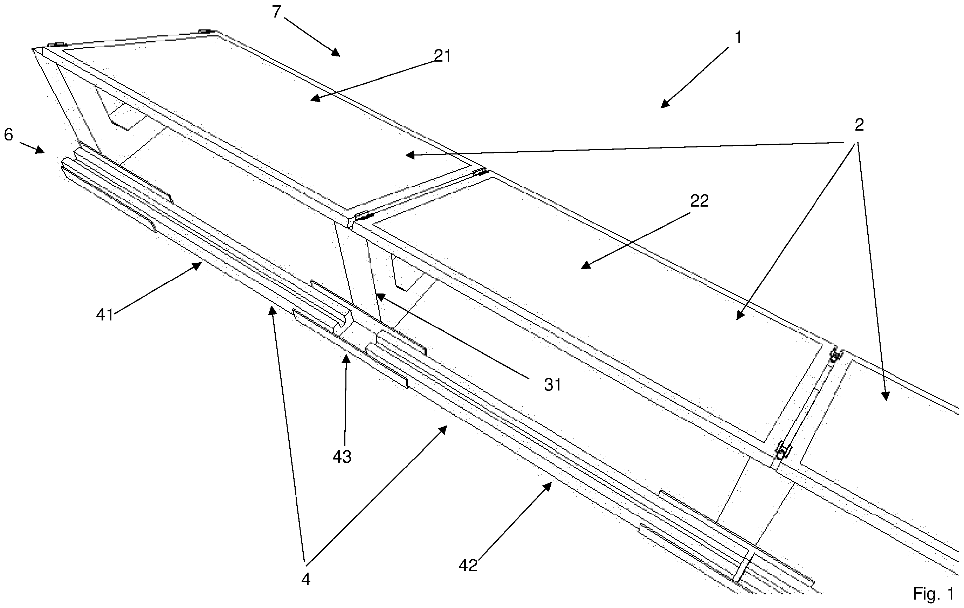

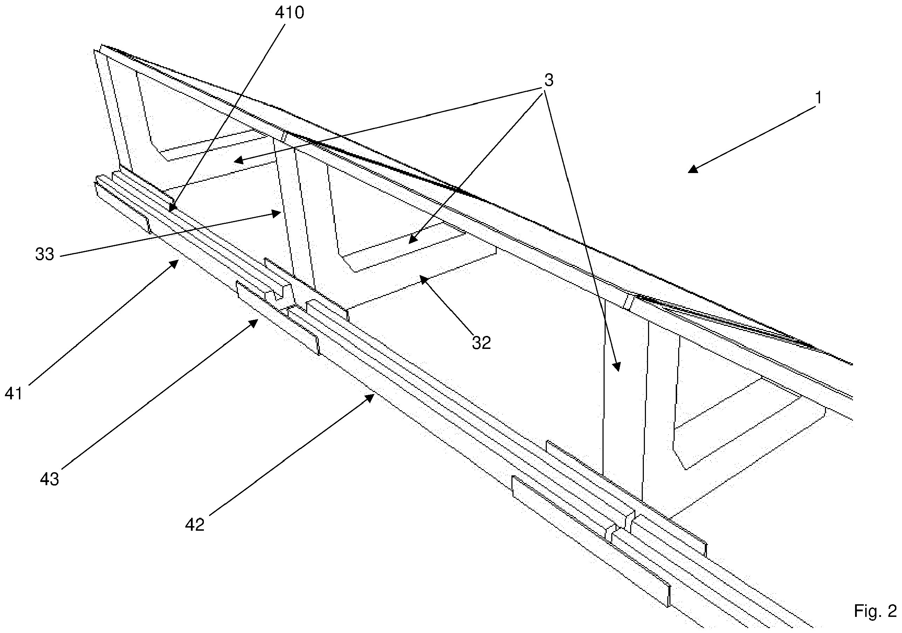

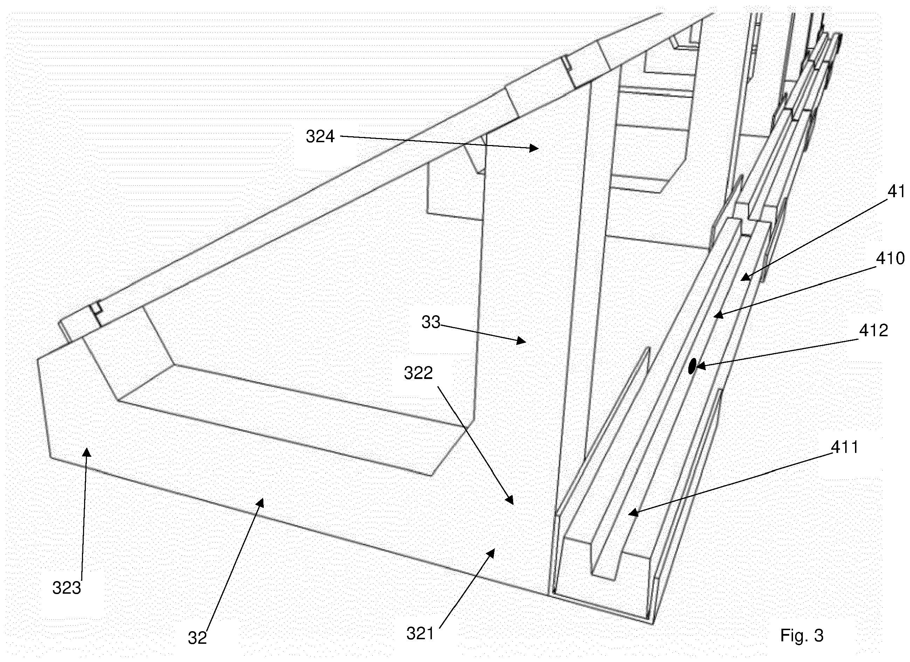

- figures 1-3 show perspective views of a photovoltaic system according to the present invention;

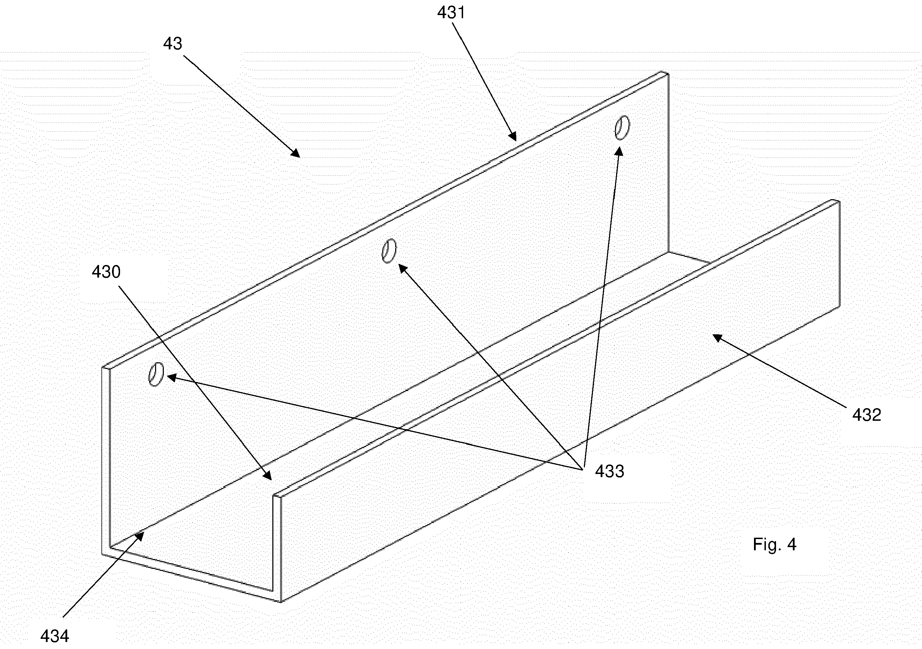

- figure 4 shows a perspective view of a detail of the photovoltaic system.

A photovoltaic system is denoted in the appended figures by reference number 1. This photovoltaic system 1 comprises photovoltaic panels 2 arranged in a row comprising at least one first and a second photovoltaic panel 21, 22. The photovoltaic panels 2 allow the production of electric current. Conveniently, the photovoltaic system 1 can comprise several rows of photovoltaic panels. In the course of this discussion we will focus on a row of these photovoltaic panels, but what is described with reference to this row can also be repeated for any remaining rows.

The system 1 comprises support ballasts 3 supporting the photovoltaic panels 2. The photovoltaic panels 2 are constrained to the ballasts, for example by means of removable hooking systems. The ballasts in addition to offering a resistance to overturning also allow to support the photovoltaic panels. The photovoltaic panels 2 of the row (or more generally at least the first and the second photovoltaic panel 21, 22) are arranged inclined with respect to a horizontal plane. This is to better intercept the sun's rays. However, this is penalizing for wind resistance, especially if the wind comes from certain angles (typically if it blows from behind the photovoltaic panels).

The system 1 comprises a means 4 for the mutual connection of at least one group of said ballasts. This is to improve resistance to overturning due to wind and to increase structural stiffness.

The reciprocal connecting means 4 comprises a first fairlead conduit 41. Conveniently it is made of concrete, typically vibrated and pre-stressed. The connection by means of concrete elements implies that this component is not subject to deformation. It also does not rust. Furthermore, the structural stiffening element also allows to define a housing for the transit of electrical cables (for the passage of electric current generated by the panel and/or for signal input to or from the photovoltaic panel). Conveniently, the first fairlead conduit 41 rests (in particular it is laid down) on the ground (flooring, ground, etc.).

The first fairlead conduit 41 has a prevalent longitudinal extension. Conveniently, this first conduit 41 has a longitudinal extension greater than 70 centimetres. In the preferred solutions it has a longitudinal extension equal to 95 or 160 or 185 centimetres. Conveniently, the first conduit 41 has a groove 410 facing upwards. This groove 410 allows housing the cables. Conveniently, this groove 410 extends along the entire longitudinal extension of the first conduit 41. The groove 410 opens up externally at the ends of the first conduit 41. This groove 410 is straight.

The first fairlead conduit 41 (or in any case the groove 410) comprises a bottom 411. A water drainage hole 412 extends from this bottom. This hole 412 passes through the bottom 411. Typically, this hole 412 serves to avoid stagnation of rainwater.

Optionally, a cover of the first fairlead conduit 41 may be present (but it is a completely optional feature and is not shown in the accompanying drawings). Typically this cover is made of plastic material. The cover covers the groove 410. In this way the entry of water, debris and dust is minimised.

The mutual connection means 4 comprises a second fairlead conduit 42. The second conduit 42 is aligned with the first conduit 41. The first and the second conduit 41, 42 extend along the same straight line. In particular, the first and the second conduit 41, 42 have a prevalent rectilinear extension along the same direction. In particular, the straight line in which the longitudinal extension axes of the first and of the second conduit 41, 42 lie is the same. Conveniently, this second fairlead conduit 42 is also made of concrete. One or more of the characteristics described with reference to the first fairlead conduit 41 can also be repeated for the second fairlead conduit 42. Conveniently, the first fairlead conduit 41 extends between (in particular it connects) two of said ballasts 3 which support the first photovoltaic panel 21. In particular, the first fairlead conduit 41 covers the distance between the two ballasts 3 which support the first photovoltaic panel 21.

Conveniently, the second fairlead conduit 42 extends between (in particular it connects) two of said ballasts 3 which support the second photovoltaic panel 22. In particular, the second fairlead conduit 42 covers the distance between the two ballasts 3 which support the second photovoltaic panel 22. As exemplified in the accompanying figures, a ballast can help support both the first and the second photovoltaic panel 21,22.

Conveniently, the mutual connection means 4 comprises a connector 43 of the first and of the second fairlead conduit 41, 42. Conveniently, the connector 43 is constrained to a predetermined ballast 31. This predetermined ballast 31 is part of said group of ballasts 3. In particular, said predetermined ballast is a ballast which supports both the first and the second photovoltaic panel 21, 22. The connector 43 comprises a channel 434 inside which both the first and the second fairlead conduit 41, 42 engage. Conveniently, the connector 43 is made of metal. In particular it has an anti-corrosion coating. For example, this coating comprises a zinc magnesium coating (typically zinc magnelis 6/10).

The connector 43 defines a channel in which the first conduit 41 protrudes from one end and the second conduit 42 from the other end. The channel of the connector 43 is in fact open at the ends.

Preferably the connector 43 is constrained on the predetermined ballast 31 by a threaded body that traverses said connector 43 and engages in said predetermined ballast 31. For example, this threaded body could be a stud provided with an end head and an at least partially threaded stem. However, it could also be replaced by other connection elements.

The connector 43 comprises a lower base 430 and a first and second side wall 431,432 that protrude upwards from the lower base 430. The first side wall 431 with respect to the second side wall 432 is higher and much closer to the predetermined ballast 31. The first and the second conduit 41, 42 suitably rest on the base 430. The first and the second side wall 431, 432 laterally constrain the first and the second conduit 41, 42.

The connector 43 has a prevalent longitudinal extension. However, the longitudinal extension of the connector 43 is lower than the longitudinal extension of the first conduit 41. The connector 43 comprises a plurality of holes 433 arranged on said first side wall 431. These holes 433 extend one after the other and are placed in three different positions along a longitudinal extension. Conveniently, the holes 433 are all at the same height. The threaded body passes through one of said holes 433.

At least one of said group of ballasts 3 comprises two substantially orthogonal sides 32, 33 having common ends and distanced ends. These sides can also be referred to as arms. The distanced ends are designed to support at least partially at least one of the first or second photovoltaic panel 21, 22. One of said two sides 32, 33 being on the ground, the means 4 for the mutual connection of the ballasts 3 being hooked to the other (which preferably extends vertically).

Conveniently, this inclined side 34 protrudes from one of the two mutually orthogonal sides. In particular, it protrudes downwards from the side with vertical extension. Optionally, the group of ballasts 3 could be shaped (solution not illustrated) as a triangular or trapezoidal element (preferably it is shaped as a right triangle or right trapezoid).

The first and the second panel 21, 22 face an area 7 in front of the system 1. The mutual connection means 4 extends parallel to the row defined by the photovoltaic panels 2 and are located in a rear area 6 of the system 1. The mutual connection means 4 comprises a modular structure which extends along the same straight line parallel to the row of photovoltaic panels. In particular, they comprise an alternation of a component having the characteristics of (preferably equal to) said first conduit 41 and a component having the characteristics of (preferably equal to) said connector 43. In this way they define a rectilinear structure at the ends of which there are two connectors. A corresponding connector is associated with each ballast 3. Each photovoltaic panel is associated with a corresponding conduit.

In the solution exemplified in the accompanying figures, the first and the second photovoltaic panel 21, 22 are consecutive. They are supported by three of said ballasts 3. One of said ballasts 3 is in common with both the first and the second photovoltaic panel 21, 22. Each of said three weights 3 is connected to a corresponding connector which defines a channel. The first conduit 41 extends between a first pair of these connectors. The second conduit 42 extends between a second pair of said connectors. The first and the second pair of connectors have a common connector (which is intermediate and in which both the first and the second conduit 41, 42 are engaged).

The present invention achieves important advantages.

First of all it allows improving the stiffness of the photovoltaic system and exerting a more effective resistance to the overturning action exerted by the wind. It also makes it possible to extend the life of the system by reducing maintenance interventions.

## Claims

1. A photovoltaic system comprising:
- photovoltaic panels (2) arranged in a row comprising at least one first and a second photovoltaic panel (21, 22);
- support ballasts (3) supporting the photovoltaic panels (2);
- a means (4) for the mutual connection of at least one group of said ballasts;
**characterized in that** said mutual connection means (4) comprises a first concrete fairlead conduit (41).

2. The system according to claim 1, **characterized in that** the mutual connection means (4) comprises:
- a second fairlead conduit (42) aligned on the first fairlead conduit (41);
- a connector (43) of the first and the second fairlead conduit (41, 42); said connector (43) being constrained on a predetermined ballast (31); said predetermined ballast (31) being part of said group of ballasts (3); said connector (43) comprising a channel (434) inside which both the first and the second fairlead conduit (41, 42) engages.

3. The system according to claim 2, **characterized in that** said connector (43) is constrained on said predetermined ballast (31) by a threaded body that traverses said connector (43) and engages in said predetermined ballast (31).

4. The system according to claim 2 or 3, **characterized in that** said connector (43) comprises a lower base (430) and a first and a second side wall (431,432) that protrude upwards from the lower base (430); the first side wall (431) being with respect to the second side wall (432) nearer the predetermined ballast (31).

5. The system according to claim 4 as appended to claim 3, **characterized in that** said connector (43) has a prevalent longitudinal extension and comprises a plurality of holes (433) arranged on said first side wall (431) longitudinally one after the other; said threaded body traversing one of said holes (433).

6. The system according to any one of claims 2 to 5, **characterized in that** said connector (43) is made of metal material.

7. The system according to any claims from 2 to 6, **characterized in that** said predetermined ballast (31) is a ballast which supports both the first and the second photovoltaic panel (21, 22).

8. The system according to any one of the preceding claims **characterized in that** the first fairlead conduit (41) comprises a bottom (411); a drainage hole (412) for water being placed on the bottom (411).

9. The system according to any one of the preceding claims **characterized in that** it comprises a cover of the first fairlead conduit (41).

10. The system according to any one of the preceding claims **characterized in that** at least one of said group of ballasts (3) comprises two substantially orthogonal sides (32, 33) having common ends (321, 322) and distanced ends (323, 324); said distanced ends (323, 324) are designed to support at least partially one of the first or the second photovoltaic panel (21, 22); one of said two sides (32, 33) being on the ground, the means (4) for the mutual connection of the ballasts (3) being hooked to the other.

11. The system according to any one of the preceding claims **characterized in that** the first and the second panel (21, 22) face an area (7) in front of the system (1); said reciprocal connecting means (4) extending parallel to the row defined by the photovoltaic panels (2) and being located in a rear area (6) of the system (1).

12. The system according to any one of the preceding claims **characterized in that** the first conduit (41) has a groove (410) facing upwards; electrical cables for the passage of electric current generated by the panel and/or for signal input to or from the photovoltaic panel being housed in said groove (410).

## Patentansprüche

1. Fotovoltaiksystem, umfassend:
- Fotovoltaikpaneele (2), die in einer Reihe angeordnet sind, umfassend mindestens ein erstes und ein zweites Fotovoltaikpaneel (21, 22);
- Tragballaste (3), die die Fotovoltaikpaneele (2) tragen;
- Mittel (4) für die gegenseitige Verbindung von mindestens einer Gruppe der Ballaste;
**dadurch gekennzeichnet, dass** die gegenseitigen Verbindungsmittel (4) eine erste Betonkabelführung (41) umfassen.

2. System nach Anspruch 1, **dadurch gekennzeichnet, dass** die gegenseitigen Verbindungsmittel (4) Folgendes umfassen:
- eine zweite Kabelführung (42), die an der ersten Kabelführung (41) ausgerichtet ist;
- einen Steckverbinder (43) der ersten und der zweiten Kabelführung (41, 42); wobei der Steckverbinder (43) auf einen vorbestimmten Ballast (31) festgespannt ist; wobei der vorbestimmte Ballast (31) Teil der Gruppe von Ballasten (3) ist; wobei der Steckverbinder (43) einen Kanal (434) umfasst, in den sowohl die erste als auch die zweite Kabelführung (41, 42) eingreifen.

3. System nach Anspruch 2, **dadurch gekennzeichnet, dass** der Steckverbinder (43) auf den vorbestimmten Ballast (31) durch einen Gewindekörper festgespannt ist, der den Steckverbinder (43) durchquert und in den vorbestimmten Ballast (31) eingreift.

4. System nach Anspruch 2 oder 3, **dadurch gekennzeichnet, dass** der Steckverbinder (43) eine untere Basis (430) und eine erste und eine zweite Seitenwand (431, 432) umfasst, die von der unteren Basis (430) nach oben vorstehen; wobei sich die erste Seitenwand (431) in Bezug auf die zweite Seitenwand (432) näher am vorbestimmten Ballast (31) befindet.

5. System nach Anspruch 4 in Verbindung mit Anspruch 3, **dadurch gekennzeichnet, dass** der Steckverbinder (43) eine vorherrschende Längserstreckung aufweist und eine Vielzahl von Löchern (433) umfasst, die in der ersten Seitenwand (431) in Längsrichtung eines nach dem anderen angeordnet sind; wobei der Gewindekörper eines der Löcher (433) durchquert.

6. System nach einem der Ansprüche 2 bis 5, **dadurch gekennzeichnet, dass** der Steckverbinder (43) aus metallischem Material hergestellt ist.

7. System nach einem der Ansprüche 2 bis 6, **dadurch gekennzeichnet, dass** es sich beim vorbestimmten Ballast (31) um einen Ballast handelt, der sowohl das erste als auch das zweite Fotovoltaikpaneel (21, 22) trägt.

8. System nach einem der vorhergehenden Ansprüche, **dadurch gekennzeichnet, dass** die erste Kabelführung (41) einen Boden (411) umfasst; wobei ein Ablaufloch (412) für Wasser auf dem Boden (411) angeordnet ist.

9. System nach einem der vorhergehenden Ansprüche, **dadurch gekennzeichnet, dass** es eine Abdeckung der ersten Kabelführung (41) enthält.

10. System nach einem der vorhergehenden Ansprüche, **dadurch gekennzeichnet, dass** wenigstens ein der Gruppe von Ballasten (3) zwei im Wesentlichen orthogonale Seiten (32, 33) umfasst, die gemeinsame Enden (321, 322) und beabstandete Enden (323, 324) aufweisen; wobei die beabstandeten Enden (323, 324) dazu bestimmt sind, wenigstens teilweise das erste oder das zweite Fotovoltaikpaneel (21, 22) zu tragen; wobei eine der beiden Seiten (32, 33) am Boden liegt und die Mittel (4) für die gegenseitige Verbindung der Ballaste (3) an der anderen eingehakt sind.

11. System nach einem der vorhergehenden Ansprüche, **dadurch gekennzeichnet, dass** das erste und das zweite Paneel (21, 22) einem Bereich (7) vor dem System (1) zugewandt sind; wobei sich die wechselseitigen Verbindungsmittel (4) parallel zu der Reihe erstrecken, die durch die Fotovoltaikpaneelen (2) definiert ist, und in einem hinteren Bereich (6) des Systems (1) angeordnet sind.

12. System nach einem der vorhergehenden Ansprüche, **dadurch gekennzeichnet, dass** die erste Führung (41) eine Nut (410) aufweist, die nach oben gerichtet ist; wobei elektrische Kabel für den Durchgang von elektrischem Strom, der vom Paneel erzeugt wird, und/oder für eine Signaleingabe zu oder von dem Fotovoltaikpaneel in der Nut (410) untergebracht sind.

## Revendications

1. Système photovoltaïque, comprenant :
- des panneaux photovoltaïques (2) disposés dans une rangée, comprenant au moins un premier et un deuxième panneau photovoltaïque (21, 22) ;
- des ballasts de support (3) supportant les panneaux photovoltaïques (2) ;
- des moyens (4) de raccordement mutuel d'au moins un groupe desdits ballasts ;
**caractérisé en ce que** lesdits moyens de raccordement mutuel (4) comprennent un premier conduit guide-câble en béton (41).

2. Système selon la revendication 1, **caractérisé en ce que** les moyens de raccordement mutuel (4) comprennent :
- un deuxième conduit guide-câble (42) aligné sur le premier conduit guide-câble (41) ;
- un connecteur (43) du premier et du deuxième conduit guide-câble (41, 42) ; ledit connecteur (43) étant solidaire d'un ballast prédéterminé (31) ; ledit ballast prédéterminé (31) faisant partie dudit groupe de ballasts (3) ; ledit connecteur (43) comprenant un canal (434) à l'intérieur duquel se mettent en prise à la fois le premier et le deuxième conduit guide-câble (41, 42).

3. Système selon la revendication 2, **caractérisé en ce que** ledit connecteur (43) est solidaire dudit ballast prédéterminé (31) par un corps fileté qui traverse ledit connecteur (43) et se met en prise avec ledit ballast prédéterminé (31).

4. Système selon la revendication 2 ou 3, **caractérisé en ce que** ledit connecteur (43) comprend une base inférieure (430) et une première et une deuxième paroi latérale (431, 432) qui dépassent vers le haut à partir de la base inférieure (430) ; la première paroi latérale (431) étant, par rapport à la deuxième paroi latérale (432), plus proche du ballast prédéterminé (31).

5. Système selon la revendication 4 lorsque celle-ci est rattachée à la revendication 3, **caractérisé en ce que** ledit connecteur (43) a une extension longitudinale prédominante et comprend une pluralité de trous (433) disposés sur ladite première paroi latérale (431) longitudinalement l'un après l'autre ; ledit corps fileté traversant un desdits trous (433).

6. Système selon l'une quelconque des revendications 2 à 5, **caractérisé en ce que** ledit connecteur (43) est en matériau métallique.

7. Système selon l'une quelconque des revendications 2 à 6, **caractérisé en ce que** ledit ballast prédéterminé (31) est un ballast qui supporte à la fois le premier et le deuxième panneau photovoltaïque (21, 22).

8. Système selon l'une quelconque des revendications précédentes, **caractérisé en ce que** le premier conduit guide-câble (41) comprend un fond (411) ; un trou de drainage (412) pour l'eau étant placé sur le fond (411).

9. Système selon l'une quelconque des revendications précédentes, **caractérisé en ce qu'**il comprend un recouvrement du premier conduit guide-câble (41).

10. Système selon l'une quelconque des revendications précédentes, **caractérisé en ce qu'**au moins un ballast dudit groupe de ballasts (3) comprend deux côtés (32, 33) essentiellement orthogonaux comportant des extrémités communes (321, 322) et des extrémités distantes (323, 324) ; lesdites extrémités distantes (323, 324) sont conçues pour supporter au moins partiellement l'un des premier ou deuxième panneaux photovoltaïques (21, 22) ; un desdits deux côtés (32, 33) étant au sol, les moyens (4) de raccordement mutuel des ballasts (3) étant accrochés à l'autre.

11. Système selon l'une quelconque des revendications précédentes, **caractérisé en ce que** le premier et le deuxième panneau (21, 22) font face à une zone (7) située à l'avant du système (1) ; lesdits moyens de raccordement réciproque (4) se prolongeant parallèlement à la rangée définie par les panneaux photovoltaïques (2) et étant situés dans une zone arrière (6) du système (1).

12. Système selon l'une quelconque des revendications précédentes, **caractérisé en ce que** le premier conduit (41) comporte une rainure (410) orientée vers le haut ; des câbles électriques pour le passage du courant électrique généré par le panneau et/ou pour l'entrée de signaux vers ou à partir du panneau photovoltaïque étant logés dans ladite rainure (410).
